# EUROPEAN PATENT APPLICATION

(11) **EP 1 970 806 A1**
(43) Date of publication of application: **17.09.2008**
(21) Application number: 08102576.9
(22) Date of filing: 13.03.2008
(51) Int. Cl.: G06F 11/07, F02D 41/22, F02D 41/26, G01M 15/00, B60W 50/02, G07C 5/00, G05B 23/00

(54) **Method for performing application review validation testing for an engine and an engine configured for installation into an application**

(30) Priority: 16.03.2007 US 687141
(71) Applicant: Deere & Company, Moline, IL 61265-8098 (US)
(72) Inventor: Ritter, Curtis P., Waterloo, IA 50701 (US); Peterson, Russell E., Waterloo, IA 50701 (US)
(74) Representative: Löser, Iris

(57) **Abstract**

A method for performing application review validation testing for an engine (12) as installed in an application (10), the engine (12) having production sensors and a production electronic control unit (ECU) (16) for controlling the engine (12) using the production sensors, includes running the engine (12); reading an output of the production sensors with the production ECU (16) during the running of the engine (10); and determining with the production ECU (16) whether the engine (12) as installed in the application (10) is in compliance with at least one requirement of the application review validation testing based on the output.

## Description

The present invention relates to engines, and more particularly, to performing application review validation testing for an engine as installed in an application.

Engines, such as internal combustion engines, are used in many applications, such as power generation, land and marine transportation, and the agricultural, construction, and forestry industries. For each particular installation application, i.e., type of machine, vehicle, or other equipment into which the engine is installed, the engine manufacturer typically requires an application review to ensure that the particular installation/application meets the engine manufacturer's installation requirements. This review process ensures customer satisfaction and reduces warranty expenses, and also helps to prevent problems that could result in shortened engine life, engine or equipment damage, or even injury to personnel near the equipment. In addition, the application review is becoming more important as emission regulations become more stringent - an improperly applied engine may not be within emissions compliance if the installation does not meet the requirements specified by the engine manufacturer. Examples of emission related parameters could include charge air cooler pressure differential, intake manifold temperature, and engine coolant temperature.

Typically, the application review is performed by scheduling a validation test at an original equipment manufacturer (OEM) or distributor facility, instrumenting an engine installed in the application to measure the desired parameters, testing the installed engine, and obtaining data via either manual recording or a data acquisition system to determine whether test requirements have been complied with. Validation tests conducted as part of an application review typically include "static" testing that helps to determine cooling system capacities, and determine how well the cooling system can be filled, drained, and expel air. In addition, validation testing is performed to evaluate the cooling, fuel, intake, exhaust, and other systems for the particular installation, often based on pressure and temperature measurements at various points in those systems.

Although application review validation testing provides benefits to help ensure engine reliability and durability, as well as emissions compliance, it is expensive to instrument and test an engine for an application review, and time consuming for both the manufacturer of the engine and the manufacturer of the particular application into which the engine is installed. Accordingly, it is desirable to be able to perform application review validation testing for an engine without the high cost and time associated with present application review validation testing.

It is therefore the object of the present invention to comply with this desire.

This object is met according to the invention by the teaching of claim 1 or 11 respectively, while features developing the solution in an advantageous manner are set forth in the further claims.

The present invention provides for performing application review validation testing for an engine as installed in an application.

The invention, in one form thereof, is directed to a method for performing application review validation testing for an engine as installed in an application, the engine having production sensors and a production electronic control unit (ECU) for controlling the engine using the production sensors. The method includes running the engine; reading an output of the production sensors with the production ECU during the running of the engine; and determining with the production ECU whether the engine as installed in the application is in compliance with at least one requirement of the application review validation testing based on the output.

The invention, in another form thereof, is directed to an engine configured for installation into an application. The engine includes production sensors and a production electronic control unit (ECU) for controlling the engine using the production sensors. The production ECU is configured to execute program instructions for performing application review validation testing for the engine as installed in the application, including: reading an output of the production sensors during a running of the engine; and determining whether the engine as installed in the application is in compliance with at least one requirement of the application review validation testing based on the output.

An embodiment of the invention described below is shown in the drawings, in which:
- FIG. 1: schematically depicts an application having an engine installed therein in accordance with an embodiment of the present invention.
- FIG.2: schematically depicts the application and engine of FIG. 1 in greater detail.
- FIGS. 3A and 3B: are a flowchart depicting a method for performing application review validation testing for an engine, as installed in an application, in accordance with an embodiment of the present invention.

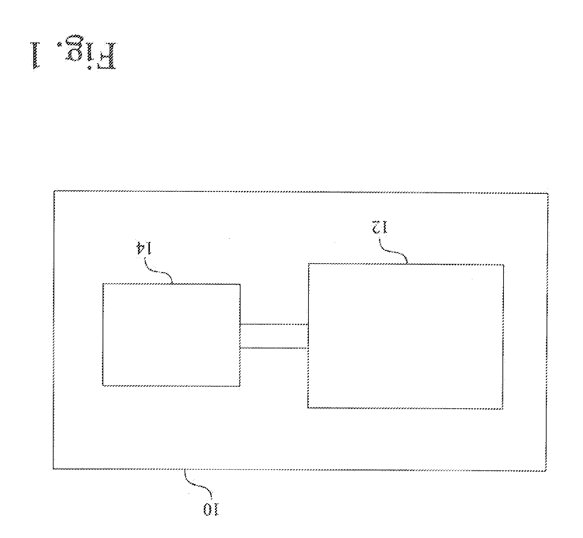

Referring now to the drawings, and in particular FIG. 1, there is shown an application 10 having an engine 12 installed therein. Engine 12 is coupled to a power absorber 14, which is considered a part of application 10. Application 10 is a machine apparatus which is powered by engine 12, and may be for example, a work machine for use in the agricultural, construction, and/or forestry industries, such as a tractor or a fork lift, or may be a transportation vehicle. In other implementations, application 10 may be in the form of a generator set or a pumping system. Application 10 may also include air compressors, hydraulic pumps, and/or other accessories driven by engine 12.

In any case, application 10 is configured to receive engine 12, and to provide services to engine 12, such as an air intake and/or filtration, exhaust, fuel delivery and return, and cooling system components. In addition, some of these services may be provided in whole or in part by components of engine 12.

Power absorber 14 is one or more components of application 10 that absorbs power generated by engine 12 for delivery or use by application 10. In embodiments where application 10 is a work machine, power absorber may take the form of a transmission and drive train. In embodiments where application 10 is a generator set or pumping system, power absorber 14 may take the form of a generator or pump, respectively.

Engine 12, as manufactured, is designed to meet various operability and emissions requirements throughout its designated operating life. As used herein, operability requirements pertain to engine power and fuel consumption performance, reliability, and durability, whereas emissions requirements pertain to engine emission limits established by the Environmental Protection Agency (EPA) and other agencies worldwide for various classes and types of engines and applications such as engine 12 and application 10. Emissions requirements include, for example, NOX and particulate emissions limits.

In order to ensure that the operability and emissions requirements of engine 12 as installed in application 10 are met, the manufacturer of engine 12 provides installation requirements that should be satisfied by the manufacturer/distributor/retailer of application 10. If the particulars of the application do not meet the requirements, adverse consequences may ensue, including operability problems, and emissions problems. Hence, confirmation that the installation requirements have been met is obtained through application review validation testing, which is typically specified by the manufacturer of engine 12, and used to ensure that the engine, as installed in the particular application, satisfies the particular requirements, whereas if not, components of application 10 and/or engine 12 may require modification to ensure compliance and the successful completion of application review validation testing.

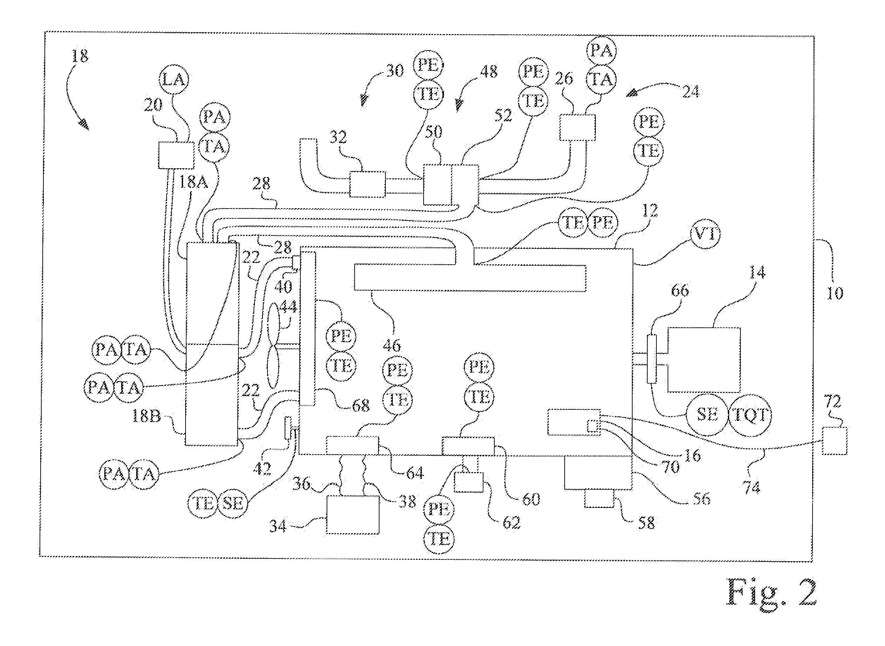

Referring now to FIG. 2, application 10 includes components that interface with components of engine 12 for providing services to engine 12. In addition, engine 12 includes a production electronic control unit (ECU) 16 that controls the operation of engine 12 based on production sensors of engine 12 (also referred to herein as engine sensors) and application sensors. In other embodiments, engine 12 may include more than one ECU 16, such as where a single ECU does not have a sufficient number of injector drivers for engine 12. As a production ECU, ECU 16 is a normal part of engine 12 that governs the operation of engine 12 via output received from production sensors during normal field engine operations, that is, from the engine sensors supplied as part of or for use with engine 12 that are used to monitor various facets of the operation of engine 12 during every day operations of engine 12 in the hands of the end user of application 10 and engine 12. ECU 16 may be supplied by the manufacturer of engine 12 as a part of engine 12, or may be supplied by the manufacturer of application 10 or a third party producer of electronic control units. In any case, ECU 16 is not a test equipment unit that is used only for testing of engine 12. Application sensors are those sensors that are mounted onto and used to monitor and/or control the operation of components of application 10. ECU 16 also monitors the output of the application sensors in managing the operation of engine 12. That is, ECU 16 is configured to execute program instructions for reading output from the production sensors and also output from the application sensors while engine 12 is running.

During application review validation testing, additional sensors, such as test equipment sensors connected to ECU 16 via a test harness, may be mounted on components of application 10 and/or engine 12, the output of which may also be monitored by ECU 16. That is, ECU 16 is configured to execute program instructions for reading test equipment sensor output from test equipment sensors while engine 12 is running. It will be understood, however, that test equipment sensors are not required for all embodiments of the present invention, and that application validation review testing and compliance determinations by ECU 16 may be made solely on the basis of the engine sensors or a combination of the engine and application sensors, depending on the requirements of particular testing protocol and the configurations of the particular engine 12 and application 10.

The phrase, "execute program instructions," as used herein, will be understood to mean that ECU 16 may execute programmed instructions in the form of software, firmware, or hardware stored in or accessed by ECU 16, but may also include any other digital or analog implementation configured to make the determinations herein described based on the output of the production sensors, application sensors, and test equipment sensors, if any. In some embodiments, the determinations herein described may also be made as part of an on-board diagnostics (OBD) system for emissions compliance, for example, where application 10 is an on-highway vehicle or an off-highway vehicle.

The components of application 10 and engine 12 include cooling system components, air intake and exhaust system components, fuel and lubrication system components, and starter & other electrical system components. Some components, such as intake and exhaust manifolds are typically provided as engine components, e.g., by the manufacturer of engine 12, whereas other components, such as the exhaust system and radiator are typically provided as application components, e.g., by the manufacturer of application 10.

In the present embodiment, components of application 10 include a radiator /charge air cooler assembly 18 having a charge air cooler (CAC) section 18A and an engine coolant section 18B, a coolant top tank 20, and associated hosing 22 that interfaces with the engine block and/or thermostat of engine 12, an air inlet system 24 including an air filter 26 and charge air cooler piping 28 for a charge air cooler, an exhaust system 30 including a muffler 32, which may include an aftertreatment device, power absorber 14 in the form of a transmission and drive train, a fuel tank 34, a fuel supply line 36, and a fuel return line 38, each of which is known in the art.

Engine coolant section 18B provides heat transfer for the engine coolant system, whereas charge air cooler section 18A provides heat transfer for the turbocharged air intake system. Although schematically depicted with charge air cooler section 18A being on top of engine coolant section 18B, it will be understood that the actual arrangement of charge air cooler section 18A and engine coolant section 18B in any particular embodiment may vary.

Components of engine 12 in the present embodiment include a thermostat 40, an engine torsional damper 42, an engine cooling fan 44, an intake manifold 46, a turbocharger 48 including a turbine 50 driven by engine exhaust and a compressor 52 for charging the air supplied to intake manifold 46 (CAC section 18A provides cooling for the air supplied to intake manifold 46 from compressor 52), an engine starter 56 with a starter circuit 58, an oil pump 60 and one or more onboard or remote oil filter 62, a fuel pump 64, a flywheel 66, and a coolant pump 68, each of which is known in the art.

Application sensors include temperature sensors, TA, pressure sensors PA, and a level sensor LA for measuring fluid level, as required for each component for which operating data is sought. Engine sensors include temperature sensors, TE, pressure sensors, PE, a flow sensor, FE, speed sensors, SE, a current sensor, CE, for measuring electrical current, and a resistance sensor, RE, for measuring electrical resistance, as required for each component for which operating data is sought. In the present embodiment, test equipment sensors are also temporarily installed for purposes of application review validation testing, including a vibration sensor (accelerometer), VT, mounted on engine 12, and a torque sensor TQT for measuring engine output torque at flywheel 66.

The form and operational characteristics of each sensor is suited to the particular component for which operating data is sought. In some cases, a single differential pressure sensor may be employed instead of two gage pressure sensors. In any case, for purposes of illustration, a pressure differential sensor is depicted as being two pressure sensors, PA or PE, depending on whether the sensor is an application or engine sensor, respectively.

In the present embodiment, as depicted in FIG. 2, PA and TA sensors are used to measure the pressure and temperature on the inlet and exit sides of charge air cooler section 18A and engine coolant section 18B for determination of pressure and temperature differentials. PA and TA sensors are also employed to measure ambient pressure and temperature upstream of air filter 26. An LA sensor measures the coolant level of coolant top tank 20.

In addition, as depicted in FIG. 2, PE and TE sensors are used to measure the pressure and temperature at the inlet and exit of compressor 52 of turbocharger 48 and at the exit of turbine 50 of turbocharger 48, and the pressure and temperature in intake manifold 46, hence, the pressure and temperature on both sides of CAC section 18A. PE and TE sensors are also used to measure the pressure and temperature of fuel supplied by fuel pump 64, the pressure and temperature output of coolant pump 68, as well as the differential pressure across coolant pump 68, the differential pressure and the temperature at oil filter 62, the oil pressure and temperature at oil pump 60, and the coolant pressure and temperature at thermostat 40. A TE sensor is used to measure the temperature of engine torsional damper 42.

A sensor SE is used to measure the speed of engine torsional damper 42, a sensor SE is used to measure engine speed at flywheel 66, and a sensor SE is used to measure engine cooling fan 44 speed. A sensor CE and a sensor RE are used to measure the current and resistance, respectively, of starter circuit 58 that powers engine starter 56. A flow sensor FE is used to measure coolant flow through thermostat 40.

Each of the application and engine sensors provide output that is read by ECU 16 in controlling the operation of engine 12, as well as for determining whether engine 12 as installed in application 10 has passed application review validation testing. In addition, ECU 16 receives output from the test equipment sensors, which is also used in determining whether engine 12 as installed in application 10 has passed application review validation testing.

Although the present embodiment is described with respect to certain sensors and components of engine 12 and application 10, e.g., those sensors and components described herein, it will be understood than other sensors may be employed in conjunction with other components of engine 12 and/or application 10 as part of application review validation testing without departing from the scope of the present invention.

Application review validation tests depend on the type of engine 12 employed, but typically include cooling systems tests to determine fill volume, overflow, and expansion volume, de-aeration time, hot shutdown coolant loss, and air-to-boil (ATB), otherwise known as limiting ambient temperature (LAT), which are known tests in the art. Application review validation testing also includes determining air intake restriction, exhaust back pressure, CAC delta pressure, and ambient-to-intake temperature rise. In other embodiments, the testing may also include feedback on aftertreatment systems including temperatures, pressures, load profile calculation, and active Diesel Particulate Filter (DPF) effectiveness. Additionally, emissions sensors such as used to measure soot levels may be used in accordance with embodiments of the present invention. An application strategy might be to choose a passive aftertreatment system where regeneration of the DPF is accomplished strictly due to enough engine operation at high load factors. In such a case, the application review validation testing may determine if the passive system is acceptable for the particular application 10, or if an active system should be installed.

In any event, each such parameter e.g., as described in the preceding paragraph, pertains to engine operability, engine emissions, or both. Thus, one of the parameters may pertain to engine operability, another may pertain to engine emissions, and yet another may pertain to both engine operability and engine emissions. For example, air intake restriction may be determined by ECU 16 based on ambient pressure sensor PA and compressor inlet sensor PE. An air intake restriction that is higher than specified limits may reduce engine performance, e.g., by increasing fuel consumption and decreasing power output. However, an air intake restriction that is higher than specified limits may also result in increased engine emissions that exceed allowable EPA or other emissions related certification limits. Accordingly, an air intake restriction parameter is relevant to both engine operability and engine emissions requirements.

On the other hand, the temperature of engine torsional damper 42 is a parameter that may be relevant to engine operability, but may have little or no impact on engine emissions.

When the application review validation testing is performed, ECU 16 receives the output from the sensors, which is used to determine if engine 12, as installed in application 10, is in compliance with requirements. The determination of compliance or noncompliance is performed by comparing actual parameter values based on sensor output, such as pressure, temperature, and differential pressure limits, as well as fluid level, vibration, resistance, current, and flow limits, with corresponding target parameter values, i.e., maximum limits or ranges of allowable values. The test data is stored in a memory 70 of ECU 16 for use by ECU 16 in determining compliance. In some cases, the sensor data is used directly by ECU 16 to determine compliance, e.g., where the parameter is given simply by the output of the sensor, e.g., an absolute temperature value. In other cases, ECU 16 performs calculations to determine parameters based on sensor output, such as differential pressure, for example, wherein ECU 16 calculates a pressure differential from the output of two pressure sensors. By performing such calculations, the use of dedicated sensors may be reduced, e.g., eliminating the need for a differential pressure sensor.

ECU 16 is configured for receiving a test input, e.g., a manual test input via a switch on an operator console of application 10 or engine 12, or an external test input via a direct connection to a computer, a wireless connection to a computer or a network. In addition, ECU 16 is configured to execute program instructions for determining whether to auto-initiate, i.e., force, application review validation testing at the discretion of ECU 16. Thus, in the present embodiment, application review validation testing may be performed at the direction of an operator, or may be auto-initiated by ECU 16. In either case, the application review testing may be accomplished by running engine 12 as installed in application 10 under specified loading conditions.

In addition, in the present embodiment, ECU 16 may initiate application review validation testing if ECU 16 determines that parameters have stabilized, e.g., if stabilized pressures and temperatures are achieved during normal every day operation of engine 12 in the field, in which case data obtained from the sensors during normal engine operations is used as the basis for actual parameters that are compared by ECU 16 with target parameters to determine if engine 12 as installed in application 10 is in compliance with the application review validation test requirements. The latter scenario is particularly helpful, since it averts the time and expense associated with running specific tests.

In any event, ECU 16 is configured to provide test data, based on the output of the application, engine, and test equipment sensors, for later retrieval or usage, for example, by storing the test data in memory 70 of ECU 16, and alternatively, by transmitting the test data to an off board device 72, that is, a device that is not part of engine 12 or application 10, such as a computer or server or test equipment device, via a connection 74, which in one or more embodiments may be a direct, internet, and/or wireless connection. Accordingly, in addition to determining testing compliance, the data may be used for other purposes, such as troubleshooting, trend monitoring, and maintenance determinations.

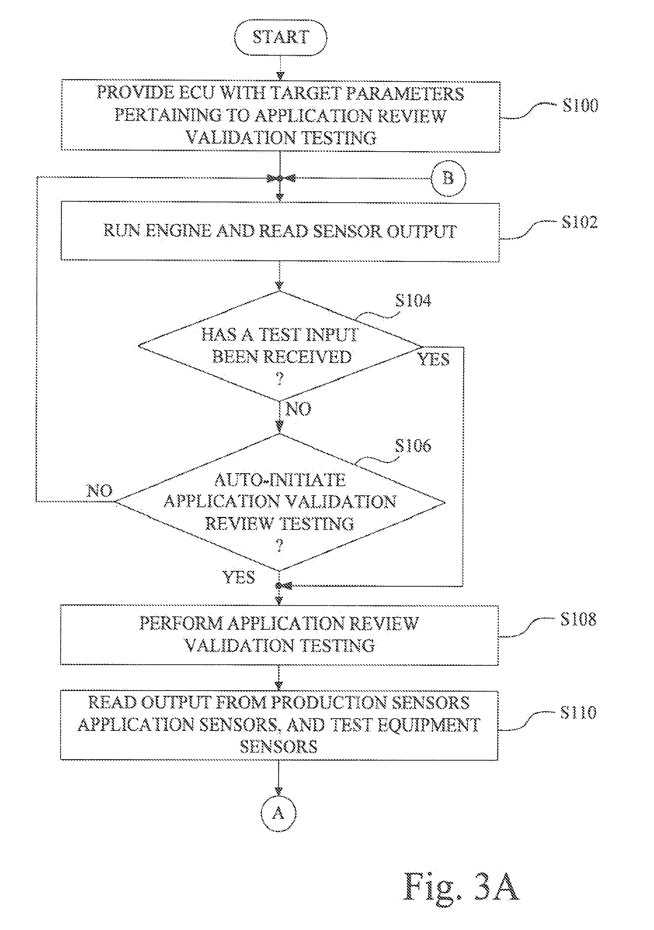

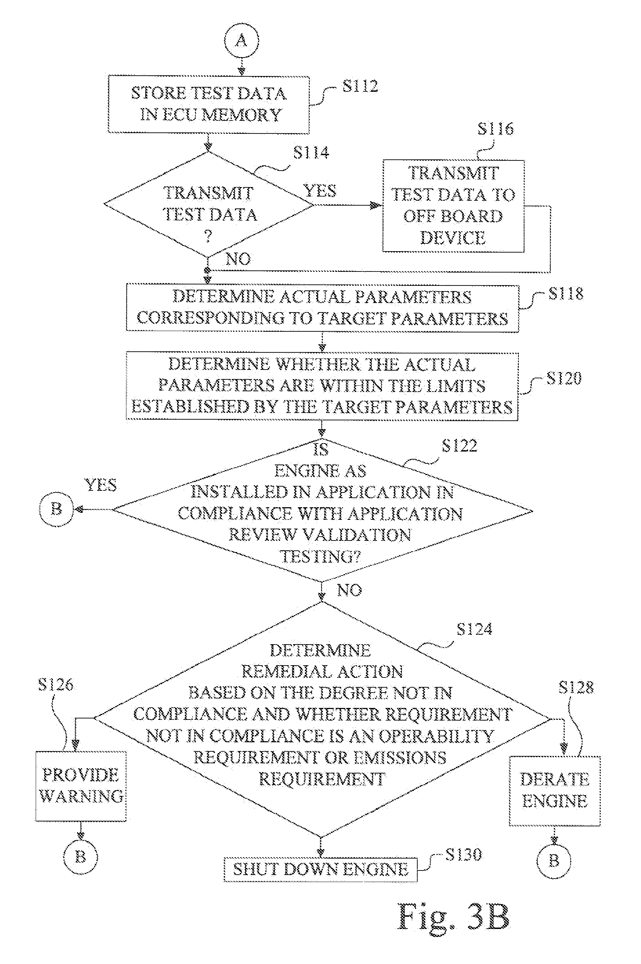

Referring now to FIGS. 3A and 3B, and steps S100-S130 illustrated therein, a method for performing application review validation testing for engine 12, as installed in application 10, is depicted in accordance with an embodiment of the present invention.

Referring now to FIG. 3A, at step S100, ECU 16 is provided with target parameters pertaining to application review validation testing that establish limits for compliance with the application review validation testing. For example, a maximum CAC pressure drop, i.e., differential pressure, is a target parameter against which an actual measured CAC pressure drop may be compared. In the present embodiment, the target parameters are programmed into ECU 16 as part of the process of manufacturing ECU 16. Alternatively, it is contemplated that the target parameters may be programmed into or otherwise provided to ECU 16 after manufacturing, for example, by storing the target parameters in memory 70.

At step S102, running of engine 12 is commenced, for example, by an operator of application 10 operating starter circuit 58 to engage engine starter 56. Once engine 12 is running, ECU 16 monitors engine 12 operability and emissions based on reading the output of the application sensors, engine sensors, and test equipment sensors.

At step S104, ECU 16 determines whether an external or manual test input has been received. If ECU 16 receives a test input, process flow proceeds to step S108, wherein testing is initiated and performed; otherwise, process flow proceeds to step S106.

At step S106, ECU 16 determines whether to auto-initiate application review validation testing. If so, process flow proceeds to step S108 to perform the testing, otherwise, process flow proceeds to back to step S102. In the present embodiment, ECU 16 auto-initiates testing based on the amount of time since engine 12 has been installed in application 10. In other embodiments, it is alternatively contemplated that ECU 16 may also auto-initiate testing based on one or more of an amount of engine operation since engine 12 has been installed in application 10, an amount of time since application review validation testing was previously performed on engine 12, and an amount of engine operation since application review validation testing was previously performed on engine 12.

In one embodiment, auto-initiation of the testing is ECU 16 receiving the output of the engine sensors and application sensors during normal field operation of engine 12 in application 10 and determining compliance with testing requirements. In another embodiment, ECU 16 may govern the output of engine 12 in accordance with pre-specified testing conditions to perform the testing. In yet another embodiment, ECU 16 may provide an operator of application 10 with instructions to operate engine 12 under pre-specified conditions in order to perform the testing. In still another embodiment, auto-initiation of testing may be in the form of ECU 16 summarizing data previously obtained based on the output of the sensors during previous normal field operations of engine 12. In such a case, the data may be analyzed by ECU 16 to determine compliance, or may be transmitted to off board device 72 via connection 74 for a compliance determination.

At step S108, application review validation testing is performed.

At step S110, ECU 16 reads the output of the engine production sensors, application sensor output from the application sensors, and test equipment sensor output from the test equipment sensors, while engine 12 is running during the performance of the testing.

Referring now to FIG. 3B, at step S112, test data based on the output of the engine production sensors, application sensors, and test equipment sensors is stored in memory 70 of ECU 16.

At step S114, ECU 16 determines whether to transmit the test data to off board device 72 via connection 74. For example, ECU 16 determines whether it has received a request to transmit the test data, for example, by a flag being set in ECU 16 memory 70. In other embodiments, ECU 16 may be configured to receive a transmit request via a switch on an operator console of application 10 or engine 12, or a transmit request from off board device 72 via connection 74. If a transmit request has been received, process flow proceeds to step S116, otherwise, process flow proceeds to step S118.

At step S116, the test data is transmitted to off board device 72 via connection 74. The transmitted test data may be employed for various purposes, for example, a separate analysis to determine testing compliance, or for an analysis of the actual parameters for use in diagnosing problems with engine 12 and/or application 10, monitoring trends, and/or making maintenance determinations for engine 12 and/or application 10.

At step S118, ECU 16 determines actual parameters corresponding to the target parameters based on the output of the engine, application, and test equipment sensors. For example, ECU 16 calculates the pressure differential across CAC section 18A based on the pressure data received from the pressure sensors PE on either side of CAC section 18A. As another example, ECU 16 determines oil pressure based on the pressure sensor PE that measures the output pressure of oil pump 60. In any case, in the present embodiment, the actual parameters are determined based on the described engine, application, and test equipment sensors.

At step S120, ECU 16 determines whether the actual parameters are within limits established by the corresponding target parameters.

At step 122, ECU 16 determines whether engine 12, as installed in application 10, is in compliance with requirements of the application review validation testing based on the engine sensor output, application sensor output, and test equipment sensor output, and, more particularly, based on whether the actual parameters, determined based on the engine sensor output, the application sensor output, and the test equipment sensor, are within the limits established by the corresponding target parameters. If engine 12, as installed in application 10, is in compliance with requirements, process flow proceeds to step S102, where engine operations may continue.

At step S124, ECU 16 determines a remedial action if engine 12 as installed in application 10 is not in compliance with requirements. ECU 16 determines the remedial action based on whether the requirement (if any) not in compliance is an operability requirement or an emissions requirement. In addition, in the present embodiment, ECU 16 selects the remedial action from a range of possible remedial actions based on the degree to which engine 12 as installed in application 10 is not in compliance with requirements, wherein the range of possible remedial actions includes providing a warning, e.g., to the operator of application 10, derating engine 12 to a degree necessary to ensure compliance with operability and/or emissions requirements, as appropriate, and shutting down engine 12.

For example, if CAC section 18A pressure drop is within operability parameter limits, no remedial action is required as with respect to operability limits. However, if the CAC section 18A pressure drop nonetheless exceeds emissions parameter limits, notwithstanding that operability limits are not exceeded, ECU 16 may select the remedial action of derating engine 12 so as to ensure that emissions limits are not exceeded. In some cases, it may be acceptable to operate engine 12 slightly outside of operability and/or emissions limits for short durations, in which case, ECU 16 would select the remedial action of providing a warning. In other cases, if an actual parameter were substantially outside of an operability and/or emissions limit, ECU 16 would shut down engine 12 to prevent damage to engine 12, application 10, and/or the environment. In any case, the remedial actions for each requirement and degree of noncompliance is determined and programmed into ECU 16, for example, during the manufacture of ECU 16.

Embodiments of the present invention pertaining to derating engine 12 may include ECU 16 reverting to a different performance program. For example, during normal engine operation, ECU 16 operates engine 12 using a performance program, e.g., performance software, based on the known characteristics of a rated engine 12. However, if engine 12 as installed in application 10 does not satisfy the installation review validation testing, ECU 16 may employ a different performance program, for example, including a lower power and/or speed rating and/or other performance changes to bring engine 12 into compliance with testing requirements.

In any case, each of the remedial actions may include the transmittal of diagnostic information, which may include codes and/or text describing the parameter(s) out of compliance, as well as corrective action information.

If at step S124 ECU 16 determines that a warning is adequate, process flow proceeds to step S126, where a warning is provided. Process flow then proceeds to step S102, where engine operations may be continued.

If at step S124 ECU 16 determines that engine 12 should be derated, process flow proceeds to step S128, where engine 12 is derated, for example, by an amount necessary to ensure compliance. The amount of derating in the present embodiment is predetermined for each parameter and degree of noncompliance, and programmed into ECU 16. In another embodiment, ECU 16 may be configured to determine the amount of derating, based on, for example, engine 12 performance curves, and engine 12 operability and emissions characteristics. In any case, once engine 12 has been derated, process flow proceeds to step S102, where engine operations may be continued, albeit with engine 12 operating in a derated state.

If at step S124 ECU 16 determines that engine 12 should be shut down, process flow proceeds to step S130, where ECU commands a shutdown of engine 12, after which, further remedial action may be taken, e.g., by the operator of application 10, to ensure compliance with requirements.

Having described the preferred embodiment, it will become apparent that various modifications can be made without departing from the scope of the invention as defined in the accompanying claims.

## Claims

1. A method for performing application review validation testing for an engine (12) as installed in an application (10), said engine (12) having production sensors and a production electronic control unit (ECU) (16) for controlling said engine (12) using said production sensors, said method comprising: running said engine (12); reading an output of said production sensors with said production ECU (16) during said running said engine (12); and determining with said production ECU (16) whether said engine (12) as installed in said application (10) is in compliance with at least one requirement of said application review validation testing based on said output.

2. The method according to claim 1, **characterized in that** said production ECU (16) determining a remedial action if said engine (12) as installed in said application (10) is not in compliance with said at least one requirement wherein said production ECU preferably determines said remedial action based on whether said at least one requirement is an operability requirement or an emissions requirement.

3. The method according to claim 2, **characterized in that** said production ECU (16) selects said remedial action from a range of possible remedial actions based on a degree to which said engine (12) as installed in said application is not in compliance with said at least one requirement, wherein said range of possible remedial actions preferably includes providing a warning, derating said engine (12), and shutting down said engine (12).

4. The method according to one or several of the previous claims, **characterized by** the steps of: providing said production ECU (16) with at least one target parameter pertaining to said application review validation testing; and determining with said production ECU (16) at least one actual parameter corresponding to said at least one target parameter based on said output. wherein preferably said determining with said production ECU (16) whether said engine (12) as installed in said application (10) is in compliance with said at least one requirement includes said production ECU (16) determining whether said at least one actual parameter is within a limit established by said at least one target parameter, said at least one target parameter and said at least one actual parameter preferably pertain to engine (12) operability and/or wherein said at least one target parameter and said at least one actual parameter pertain to engine emissions.

5. The method according to claim 4, **characterized in that** at least one target parameter includes a first target parameter and a second target parameter; said at least one actual parameter includes a first actual parameter and a second actual parameter; said first target parameter and said first actual parameter pertain to engine operability; and said second target parameter and said second actual parameter pertain to engine emissions.

6. The method according to one or several of the previous claims, **characterized in that** said application has a component interfacing with said engine (12), wherein a test equipment sensor is mounted onto one of said component and said engine (12), further comprising: reading a test equipment sensor output from said test equipment sensor with said production ECU (16) during said running said engine, wherein said determining with said production ECU (16) whether said engine (12) as installed in said application (10) is in compliance with said at least one requirement of said application review validation testing based on said output is determining with said production ECU (16) whether said engine (12) as installed in said application (10) is in compliance with said at least one requirement of said application (10) review validation testing based on said output and based on said test equipment sensor output.

7. The method according to one or several of the previous claims, **characterized in that** said application (10) has a component interfacing with said engine (12), and an application sensor mounted onto said component, further comprising: reading an application sensor output from said application sensor with said production ECU (16) during said running said engine (12), wherein said determining with said production ECU (16) whether said engine (12) as installed in said application (10) is in compliance with said at least one requirement of said application (10) review validation testing based on said output is determining with said production ECU (16) whether said engine (12) as installed in said application (10) is in compliance with said at least one requirement of said application (10) review validation testing based on said output and based on said application sensor output.

8. The method according to one or several of the previous claims, **characterized in that** said production ECU (16) receives a test input; and said production ECU (16) initiates said application review validation testing based on said test input and/or said ECU (16) stores test data based on said output in a memory (70) of said ECU (16).

9. The method according to one or several of the previous claims, **characterized in that** said ECU (16) transmits test data based on said output to an off board device via one or more of a direct, wireless, and internet connection.

10. The method according to one or several of the previous claims, **characterized in that** said production ECU (16) determines whether to auto-initiate said application review validation testing, wherein preferably said application (10) review validation testing is auto-initiated based on one of: an amount of time since said engine (12) has been installed in said application (10); and an amount of engine operation since said engine (12) has been installed in said application (10) or, wherein said application review validation testing is auto-initiated based on one of: an amount of time since said application review validation testing was previously performed; and an amount of engine operation since said application review validation testing was previously performed.

11. An engine (10) configured for installation into an application (12), **characterized by** production sensors; and a production electronic control unit (ECU) (16) for controlling said engine (12) using said production sensors, said production ECU (16) being configured to execute program instructions for performing application review validation testing for said engine (12) as installed in said application (10), including: reading an output of said production sensors during a running of said engine (12); and determining whether said engine (10) as installed in said application (12) is in compliance with at least one requirement of said application (10) review validation testing based on said output.

12. The engine according to claim 11, **characterized in that** said production ECU (16) is configured to execute program instructions for determining a remedial action if said engine (10) as installed in said application (12) is not in compliance with said at least one requirement, said production ECU (16) preferably being configured to execute program instructions for determining said remedial action based on whether said at least one requirement is an operability requirement or an emissions requirement and/or wherein said production ECU (16) is configured to execute program instructions to select said remedial action from a range of possible remedial actions based on a degree to which said engine (12) as installed in said application (10) is not in compliance with said at least one requirement, wherein said range of possible remedial actions preferably includes providing a warning, derating said engine (12), and shutting down said engine (12).

13. The engine according to claim 11 or 12, **characterized in that** said production ECU (16) being configured to execute program instructions for: receiving at least one target parameter pertaining to said application (10) review validation testing; and determining at least one actual parameter corresponding to said at least one target parameter based on said output, wherein preferably said determining whether said engine (12) as installed in said application (10) is in compliance with said at least one requirement includes determining whether said at least one actual parameter is within a limit established by said at least one target parameter, wherein preferably said at least one target parameter and said at least one actual parameter pertain to engine operability and/or wherein said at least one target parameter and said at least one actual parameter pertain to engine emissions.

14. The engine according to claim 13, **characterized in that** said at least one target parameter includes a first target parameter and a second target parameter; said at least one actual parameter includes a first actual parameter and a second actual parameter; said first target parameter and said first actual parameter pertain to engine operability; and said second target parameter and said second actual parameter pertain to engine emissions.

15. The engine according to one or several of the claims 11 to 14, **characterized in that** said application (10) has a component interfacing with said engine (12), wherein a test equipment sensor is mounted onto one of said component, said engine further comprising: said production ECU (16) being configured to execute program instructions for reading a test equipment sensor output from said test equipment sensor during said running of said engine (12), wherein said determining whether said engine (12) as installed in said application (10) is in compliance with said at least one requirement of said application review validation testing based on said output is determining whether said engine (12) as installed in said application (10) is in compliance with said at least one requirement of said application review validation testing based on said output and based on said test equipment sensor output.

16. The engine according to one or several of the claims 11 to 15, **characterized in that** said application (10) having a component interfacing with said engine (12), and an application sensor mounted onto said component, said engine (12) further comprising: said production ECU (16) being configured to execute program instructions for reading an application sensor output from said application sensor during said running of said engine (12), wherein said determining with said production ECU whether said engine (12) as installed in said application (10) is in compliance with said at least one requirement of said application (10) review validation testing based on said output is determining with said production ECU (16) whether said engine (12) as installed in said application (10) is in compliance with said at least one requirement of said application (10) review validation testing based on said output and based on said application sensor output.

17. The engine according to one or several of the claims 11 to 16, **characterized in that** said production ECU (16) being configured for receiving a test input; and said production ECU (16) being configured to execute program instructions for initiating said application review validation testing based on said test input and/or wherein said ECU (16) being configured to store test data based on said output in a memory (70) of said ECU.(16) and/or said ECU (16) being configured to execute program instructions to transmit test data based on said output to an off board device via one or more of a direct, wireless, and internet connection.

18. The engine according to one or several of the claims 11 to 17, **characterized in that** said production ECU (16) being configured to execute program instructions for determining whether to auto-initiate said application review validation testing, wherein preferably said production ECU (16) is configured to execute program instructions for determining whether to auto-initiate said application review validation testing based on one of: an amount of time since said engine (12) has been installed in said application (10); and an amount of engine operation since said engine (12) has been installed in said application (10) or wherein said production ECU (16) is configured to execute program instructions for determining whether to auto-initiate said application review validation testing based on one of: an amount of time since said application review validation testing was previously performed; and an amount of engine operation since said application review validation testing was previously performed.
